# EUROPEAN PATENT SPECIFICATION

(11) **EP 3 703 429 B1**
(45) Date of publication and mention of the grant of the patent: **22.11.2023**
(21) Application number: 17929928.4
(22) Date of filing: 26.10.2017
(51) Int. Cl.: H04W 52/02, H04L 27/26, H04W 72/04, H04L 5/00

(54) **USER TERMINAL AND RADIO COMMUNICATION METHOD**
BENUTZERENDGERÄT UND FUNKKOMMUNIKATIONSVERFAHREN
TERMINAL UTILISATEUR ET PROCÉDÉ DE COMMUNICATION RADIO

(43) Date of publication of application: 02.09.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); HOU, Xiaolin, Beijing 100190 (CN)
(74) Representative: Hoffmann Eitle
(86) International application number: PCT/JP2017/038814
(87) International publication number: WO 2019/082368

(56) References cited:
- WO-A1-2007/145035
- SAMSUNG: "Carrier Aggregation Aspects in NR", 3GPP DRAFT; R1-1708041 CA REMAINING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051273237, Retrieved from the Internet: URL:http://www.3gpp.org/ftp/Meetings_3GPP_ SYNC/RAN1/Docs/ [retrieved on 2017-05-14]
- QUALCOMM INCORPORATED: "Offline discussion on GC-PDCCH carrying SFI", 3GPP DRAFT; R1-1719172_OFFLINE DISCUSSION ON GC-PDCCH 7.3.1.3_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Prague, Czech Republic; 20171009 - 20171013 17 October 2017 (2017-10-17), XP051353639, Retrieved from the Internet: URL:http://www.3gpp.org/ftp/tsg_ran/WG1_RL 1/TSGR1_90b/Docs/ [retrieved on 2017-10-17]
- CATT: "Further consideration on the transmission profile parameters", 3GPP DRAFT; R2-1710299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague CZ; 20171009 - 20171013 8 October 2017 (2017-10-08), XP051342347, Retrieved from the Internet: URL:http://www.3gpp.org/ftp/Meetings_3GPP_ SYNC/RAN2/Docs/ [retrieved on 2017-10-08]
- VIVO: "On NR carrier aggregation", 3GPP DRAFT; R1-1717505_NR CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051340693, Retrieved from the Internet: URL:http://www.3gpp.org/ftp/Meetings_3GPP_ SYNC/RAN1/Docs/ [retrieved on 2017-10-08]
- SAMSUNG: "Remaining Scheduling Aspects for CA Operation", 3GPP DRAFT; R1-1716022 CA SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170925 17 September 2017 (2017-09-17), XP051339481, Retrieved from the Internet: URL:http://www.3gpp.org/ftp/Meetings_3GPP_ SYNC/RAN1/Docs/ [retrieved on 2017-09-17]
- PANASONIC: "Further discussion on PDCCH with cross carrier operation", 3GPP TSG-RAN WG1#59b R1-100361, 3GPP, 12 January 2010 (2010-01-12), XP050418024,
- HUAWEI et al.: "Carrier Aggregation in NR", 3GPP TSG-RAN WG2#95bis R2-166193, 3GPP, 1 October 2016 (2016-10-01), XP051150807,

## Description

### Technical Field

The present disclosure relates to a user terminal and a radio communication method in next-generation mobile communication systems.

### Background Art

In the Universal Mobile Telecommunications System (UMTS) network, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "Future Radio Access (FRA)," "5th generation mobile communication system (5G)," "5G+ (plus)," " New Radio (NR)," "New radio access (NX)," "Future generation radio access (FX)," "LTE Rel. 14," "LTE Rel. 15" (or later versions), and so on) are also under study.

A base station controls allocation (scheduling) of data to a user terminal (User Equipment (UE)). The base station uses a downlink control channel (for example, Physical Downlink Control Channel (PDCCH)) to report, to the UE, downlink control information (DCI) indicating a data scheduling indication.

Samsung: "Carrier Aggregation Aspects in NR", May 14, 2017 relates to cross-carrier scheduling and PDCCH decoding operations for CA among NR carriers.

Qualcom incorporated: "Offline discussion on GC-PDCCH carrying SFI", October 17, 2017 relates to group common PDCCH carrying slot format related information.

CATT: "Further consideration on the transmission profile parameters", October 8, 2017 relates to FFS, regarding which relevant time duration should be used as a metric to differentiate transmission profiles in MAC.

Vivo: "On NR Carrier aggregation", October 8, 2017 relates to aspects related to NR carrier aggregation.

Samsung: "Remaining Scheduling Aspects for CA Operation", September 17, 2017 relates to scheduling aspects for CA operation.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), control of communication in units such as component carrier (CC) and bandwidth parts (BWPs) has been under study. Additionally, execution of control based on numerology varying with CC and/or BWP has been under study.

Furthermore, the use of cross-BWP/cross-carrier control has been under study, in which the PDCCH reported in one BWP is used to control another BWP or in which the PDCCH reported in one CC is used to control another CC.

However, no studies have been conducted about how to determine a PDCCH monitoring periodicity for cross-BWP/cross-carrier control in a case where a plurality of numerologies are used.

There has been a problem in that a decrease in throughput and so on occur unless a technique for appropriately determining or judging the PDCCH monitoring periodicity is established.

Thus, an object of the present disclosure is to provide a user terminal and a radio communication method that can appropriately judge a monitoring periodicity for a downlink control channel even in a case where a plurality of numerologies are used.

### Solution to Problem

The object of the invention is achieved by the subject-matter of the independent claims. Advantageous embodiments are defined in the dependent claims. Further examples are provided for facilitating the understanding of the invention. A user terminal according to an aspect of the present disclosure includes a receiving section that monitors, in a given frequency resource, a downlink control channel for control in another frequency resource, and a control section that judges a monitoring periodicity for the downlink control channel for control in the another frequency resource, based on a monitoring periodicity for the downlink control channel for control in the given frequency resource. Advantageous Effects of Invention

According to an aspect of the present disclosure, the monitoring periodicity for the downlink control channel can be appropriately judged even in a case where a plurality of numerologies are used.

### Brief Description of Drawings

FIGS. 1A to 1C are diagrams to show an example in which SFI is reported by using a GC-PDCCH;
FIGS. 2A to 2C are diagrams to show an example in which SFI is reported by using a normal PDCCH;
FIGS. 3A and 3B are diagrams illustrating examples of cross-BWP and cross-carrier GC-PDCCH monitorings.
FIG. 4 is a diagram to show an example of a PDCCH monitoring periodicity according to a first embodiment;
FIG. 5 is a diagram to show another example of the PDCCH monitoring periodicity according to the first embodiment;
FIG. 6 is a diagram to show an example of a monitoring periodicity supported by a UE;
FIG. 7 is a diagram to show an example of a correspondence relationship between numerology and the monitoring periodicity;
FIG. 8 is a diagram to show an example of the PDCCH monitoring;
FIG. 9 is a diagram to show another example of the PDCCH monitoring periodicity;
FIG. 10 is a diagram to show an example of a schematic structure of a radio communication system according to one embodiment;
FIG. 11 is a diagram to show an example of an overall structure of a radio base station according to one embodiment;
FIG. 12 is a diagram to show an example of a functional structure of the radio base station according to one embodiment;
FIG. 13 is a diagram to show an example of an overall structure of a user terminal according to one embodiment;
FIG. 14 is a diagram to show an example of a functional structure of the user terminal according to one embodiment; and
FIG. 15 is a diagram to show an example of a hardware structure of the radio base station and the user terminal according to one embodiment.

### Description of Embodiments

For future radio communication systems (for example, at least one of NR, 5G, and 5G+. The systems are hereinafter also simply referred to as NR), a downlink control channel for transmitting downlink control information (DCI) has been under study.

A UE monitors one or more control resource sets (CORESET) configured for the UE itself (monitoring may be referred to as blind decoding) to detect downlink control information.

The DCI for scheduling reception of DL data (for example, downlink shared channel (Physical Downlink Shared Channel (PDSCH))) and/or measurement of DL reference signals may be also referred to as "DL assignment," "DL grant," "DL DCI," and so on. The DCI for scheduling transmission of UL data (for example, uplink shared channel (Physical Uplink Shared Channel (PUSCH))) and/or transmission of UL sounding (for measurement) signals may be also referred to as "UL grant," "UL DCI," and so on.

For NR, as the downlink control channel, a PDCCH common to one or more UEs (that may also referred to as a group common PDCCH (GC-PDCCH), a UE group common PDCCH, and so on) has been under study, besides a PDCCH for one UE (that may also referred to as a UE-specific PDCCH, a normal PDCCH, and so on).

The "normal PDCCH" may represent a PDCCH that transmits DCI used for scheduling a PDSCH and/or a PUSCH. The "normal PUSCH" may represent a PDCCH that transmits DCI used for triggering measurement, reporting, and so on of an Aperiodic Sounding Reference Signal (A-SRS) and/or an Aperiodic Channel State Information (A-CSI). The "normal PDCCH" may represent a PDCCH that transmits DCI used for controlling (activating or releasing) Semi-Persistent Scheduling (SPS), UL grant free transmission, and /or Semi-Persistent CSI (SP-CSI).

The DCI transmitted by the GC-PDCCH may be referred to as group common DCI.

The GC-PDCCH and the normal PDCCH may be allocated to leading several symbols in a slot (for example, leading 1, 2, or 3 symbols). Note that the positions to which the PDCCH is allocated are not limited to these.

Additionally, for NR, configuration of one or a plurality of bandwidth parts (BWPs) per component carrier (CC) for a UE has been under study. The BWP may be referred to as a "partial frequency band," a "partial band," and so on.

It is assumed that the BWPs are associated with particular numerologies (subcarrier spacing (SCS, Sub-Carrier Spacing), cyclic prefix length, and so on). The UE performs, in the active DL BWP (BWP utilized for DL communication), reception by using numerology associated with the DL BWP, and performs, in the active UL BWP (BWP utilized for UL communication), transmission by using numerology associated with the UL BWP.

The UE may receive BWP configuration information (that may be referred to as a BWP configuration) from the base station (that may be also referred to, for example, as a "Base Station (BS)," a "transmission/reception point (TRP)," an "eNB (eNodeB)," a "gNB," and so on).

The BWP configuration may include information indicating at least one of numerology, a frequency position (for example, center frequency), a bandwidth (for example, the number of resource blocks (also referred to as "Resource Block (RB)," "Physical RB (PRB)," and so on)), time resources (for example, a slot (mini-slot) index and a cycle) for BWP, and so on. The BWP configuration may be reported to (configured for) the UE by, for example, higher layer signaling, physical layer signaling, or a combination thereof.

Here, for example, the higher layer signaling may be any one or combinations of Radio Resource Control (RRC) signaling, Medium Access Control (MAC) signaling (for example, MAC control elements (MAC CEs), MAC Protocol Data Units (PDUs)), broadcast information (master information blocks (MIBs), or system information blocks (SIBs)), and so on. The physical layer signaling may be, for example, DCI.

For NR, dynamic control of a transmission direction (UL, DL, or the like) for each symbol has been under study. For example, study has been conducted about specification of one or more slot formats using information related to the slot format (also referred to as slot format related information (SFI) and so on).

The slot format may indicate at least one of a transmission direction during each given duration within a slot (for example, a given number of symbols), a guard period (GP), and an unknown resource (that may be referred to as a reserved resource). The SFI may include information related to the number of slots to which the slot format is applied, and so on.

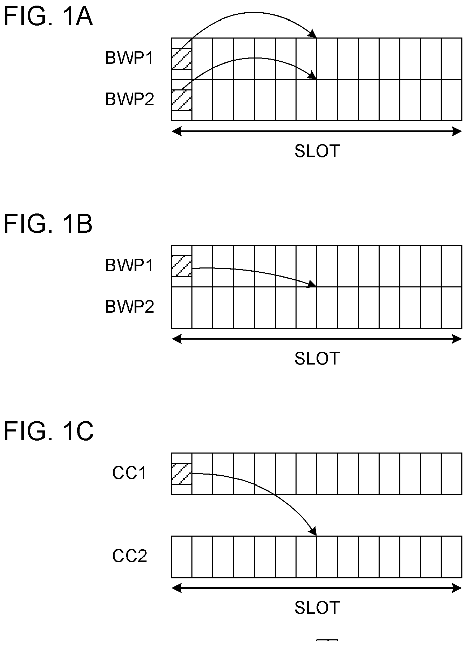

Dynamic reporting of the SFI by using the GC-PDCCH and/or the normal PDCCH has been under study. FIGS. 1A to 1C are diagrams to show an example in which SFI is reported by using the GC-PDCCH.

FIG. 1A shows an example in which SFI for one BWP in one carrier is acquired by GC-PDCCH monitoring for the same BWP in the same carrier (GC-PDCCH monitoring for the identical BWP). In FIG. 1A, SFI for a BWP1 is reported to the UE by using a GC-PDCCH for the BWP1, and SFI for a BWP2 is reported to the UE by using a GC-PDCCH for the BWP2.

FIG. 1B shows an example in which SFI for one BWP in one carrier is acquired by GC-PDCCH monitoring for another BWP in the same carrier (cross-BWP GC-PDCCH monitoring). In FIG. 1B, the SFI for the BWP2 is reported to the UE by using the GC-PDCCH for the BWP1.

FIG. 1C shows an example in which SFI in one carrier is acquired by GC-PDCCH monitoring in another carrier (cross-carrier GC-PDCCH monitoring). In FIG. 1C, SFI for CC2 is reported to the UE by using a GC-PDCCH for CC1.

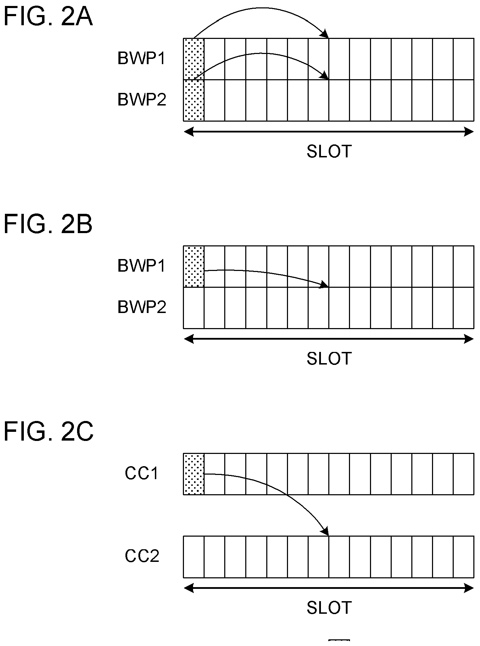

FIGS. 2A to 2C are diagrams to show an example in which SFI is reported by using the normal PDCCH. FIGS. 2A to 2C correspond to a case where the GC-PDCCH in FIGS. 1A to 1C is replaced with the normal PDCCH, and thus repeated description is omitted.

Studies have been conducted about the base station selecting a GC-PDCCH monitoring periodicity K from a given number (for example, eight) candidates for each serving cell and reporting the GC-PDCCH monitoring periodicity to the UE. K may be determined on the basis of the GC-PDCCH numerology, and for example, K = 1, 2, 5, 10, or 20 (in units of slots) have been under study. However, no studies have been conducted about whether, in a case where a plurality of numerologies are used, the GC-PDCCH monitoring periodicity has a value common to all the numerologies or a value varying with numerology.

Studies have been conducted about the use, for the normal-PDCCH monitoring periodicity, of a given number (for example, five) candidates. For example, the candidates in the study include 1, 2, 5, 10, and 20 (in units of slots). However, no studies have been conducted about whether, in a case where a plurality of numerologies are used, the normal-PDCCH monitoring periodicity has a value common to all the numerologies or a value varying with numerology.

Note that the expression "PDCCH" herein may be interpreted as "GC PDCCH and/or normal PDCCH." Note that the expression "BWP/CC" herein may be interpreted as "BWP and/or CC."

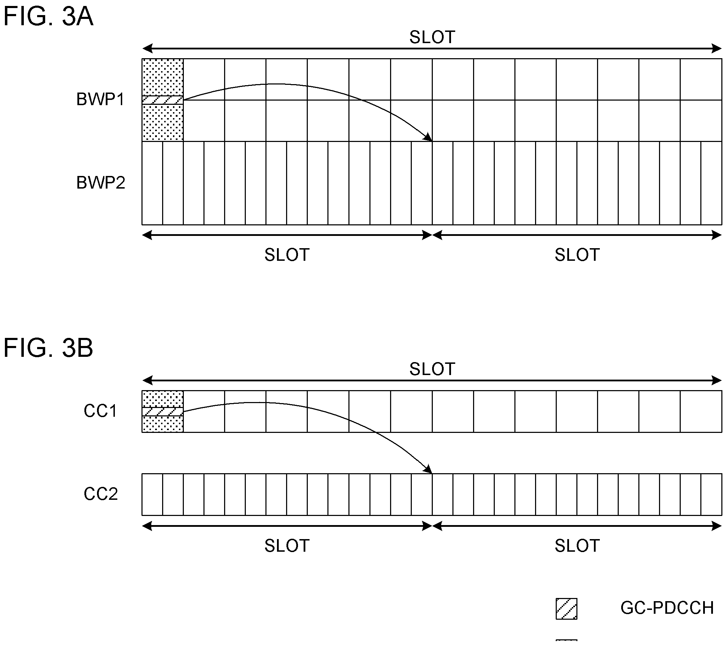

FIGS. 3A and 3B are diagrams illustrating examples of cross-BWP and cross-carrier GC-PDCCH monitorings. Different numerologies (for example, SCSs) are used for the BWP1 and BWP2 in FIG. 3A. Different numerologies (for example, SCSs) are used for the CC1 and CC2 in FIG. 3B.

In regard to FIG. 3A, no studies have been conducted about how to determine the monitoring periodicity for the PDCCH transmitted in the BWP1 for the BWP2. Similarly, in regard to FIG. 3B, no studies have been conducted about how to determine the monitoring periodicity for the PDCCH transmitted in the CC1 for the CC2.

There has been a problem in that an increase in complexity of implementation and in power consumption, a decrease in throughput and so on occur unless a technique for appropriately determining or judging the PDCCH monitoring periodicity is established.

Thus, the inventors of the present invention came up with the idea of a method for appropriately performing PDCCH monitoring for each BWP/CC.

Embodiments according to the present disclosure will be described below in detail with reference to the drawings. The radio communication method according to each embodiment may be employed independently or may be employed in combination.

The BWP/CC in which the PDCCH is monitored is hereinafter referred to as a monitoring BWP/CC, an indicating BWP/CC, or the like. The PDCCH monitoring in the monitoring BWP/CC for control in the frequency resource for the monitoring BWP/CC (for example, transmitting/receiving processing based on SFI or transmitting/receiving processing based on scheduling) is also referred to as PDCCH monitoring for the monitoring BWP/CC.

The PDCCH monitoring in the monitoring BWP/CC for control in the frequency resource for the BWPs/CCs other than the monitoring BWP/CC is also referred to as PDCCH monitoring for cross-BWP/CC.

### (Radio Communication Method)

### <First Embodiment>

In a first embodiment, the PDCCH monitoring periodicity is numerology-specific. For example, different PDCCH monitoring periodicities may be assumed for respective numerologies for BWPs/CCs intended for the cross-BWP/CC.

In a case where a plurality of different BWPs/CCs have different numerologies, the PDCCH monitoring periodicity for the monitoring BWP/CC and the PDCCH monitoring periodicity for the cross-BWP/CC may be aligned at the same timing.

In other words, it may be assumed that the UE performs the PDCCH monitoring for the cross-BWP/CC during the PDCCH monitoring periodicity for the monitoring BWP/CC.

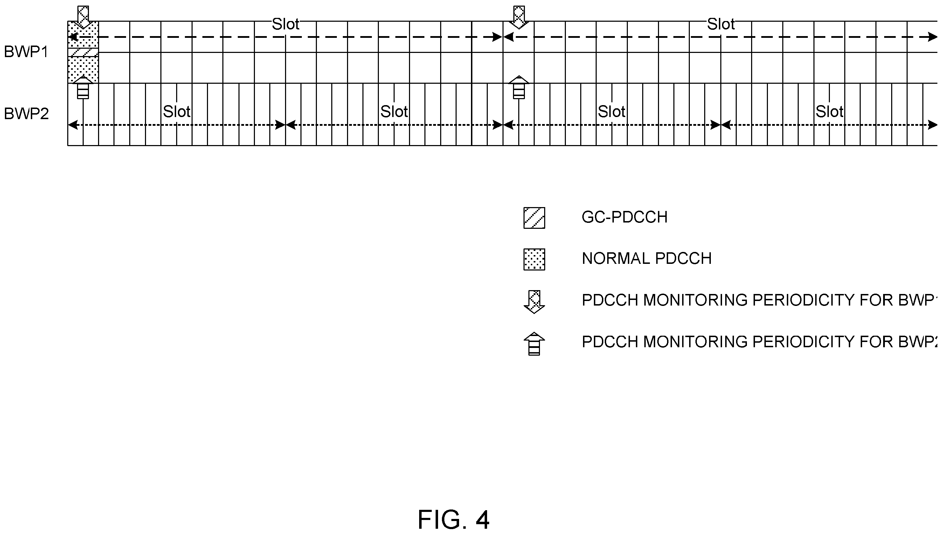

FIG. 4 is a diagram to show an example of the PDCCH monitoring periodicity according to the first embodiment. In the present example, two BWPs (BWP1 and BWP2) are configured for the UE. In the BWP1, the UE performs the PDCCH monitoring in the cross BWP for the BWP2. It is assumed that the SCS in the BWP1 is 15 kHz and that the SCS in the BWP2 is 15 * 2ⁿ kHz (n ≥ 1). In this case, the symbol length of the BWP2 is 1/2ⁿ of the symbol length of the BWP1.

For the UE, K (slots) may be configured as the PDCCH monitoring periodicity for the BWP1. For the UE, K * 2ⁿ (slots) may be set as the PDCCH monitoring periodicity for the BWP2. In FIG. 4, K = 1. The PDCCH monitoring periodicity for the BWP1 corresponds to one slot in the numerology for the BWP1, and the PDCCH monitoring periodicity for the BWP2 corresponds to two slots in the numerology for the BWP2 (in other words, one slot in the numerology for the BWP1). Such a configuration allows the UE to perform the PDCCH monitoring for the BWPs during the same period.

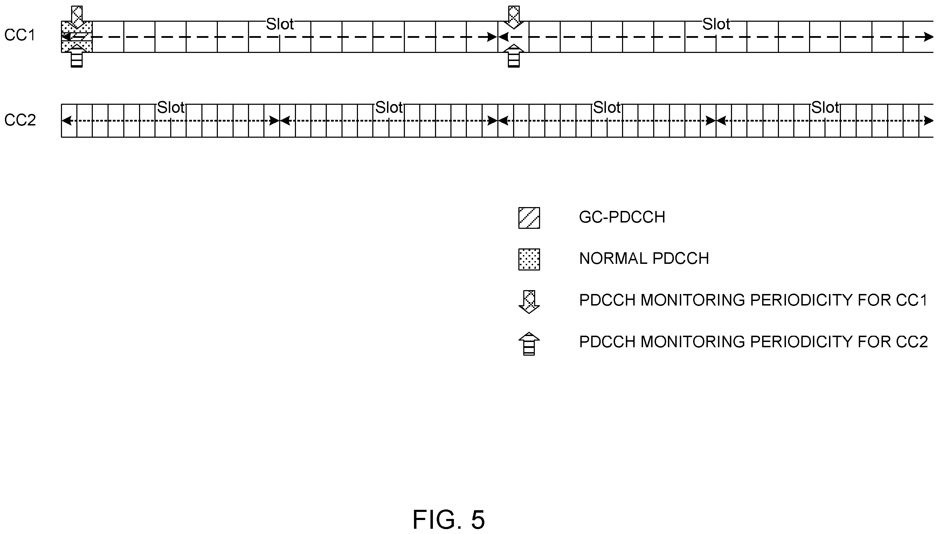

FIG. 5 is a diagram to show another example of the PDCCH monitoring periodicity according to the first embodiment. In the present example, two CCs (CC1 and CC2) are configured for the UE. In the CC1, the UE performs the PDCCH monitoring in the cross-carrier for the CC2. It is assumed that the SCS in the CC1 is 15 kHz and that the SCS in the CC2 is 15 * 2ⁿ kHz (n ≥ 1). In this case, the symbol length of the CC2 is 1/2ⁿ of the symbol length of the CC1.

For the UE, K (slots) may be configured as the PDCCH monitoring periodicity for the CC1. For the UE, K * 2ⁿ (slots) may be set as the PDCCH monitoring periodicity for the CC2. In FIG. 5, K = 1. The PDCCH monitoring periodicity for the CC1 corresponds to one slot in the numerology for the CC1, and the PDCCH monitoring periodicity for the CC2 corresponds to two slots in the numerology for the CC2 (in other words, one slot in the numerology for the CC1). Such a configuration allows the UE to perform the PDCCH monitoring for the CCs during the same period.

Note that the example has been illustrated in which the PDCCH monitoring periodicity for each BWP/CC depends on the symbol length of the BWP/CC, but the period is not limited to this. For example, the PDCCH monitoring periodicity for cross-BWP/CC may be judged, based on the numerology for the monitoring BWP/CC.

In the first embodiment, in a case where a plurality of different BWPs/CCs correspond to different numerologies, a PDCCH monitoring periodicity that is a given-number multiple of the PDCCH monitoring periodicity for a specific BWP/CC used as a reference is supported to align the PDCCH monitoring periodicity for the cross BWP/CC. The given-number multiple is preferably determined, based on the numerology for the monitoring BWP/CC and the numerology for the BWP/CC intended for the cross-BWP/CC.

The given-number multiple is a power of 2 (2ⁿ (n ≥ 1)). Here, n may be a value based on a ratio between the numerology for the monitoring BWP/CC and the numerology for the BWP/CC intended for the cross-BWP/CC.

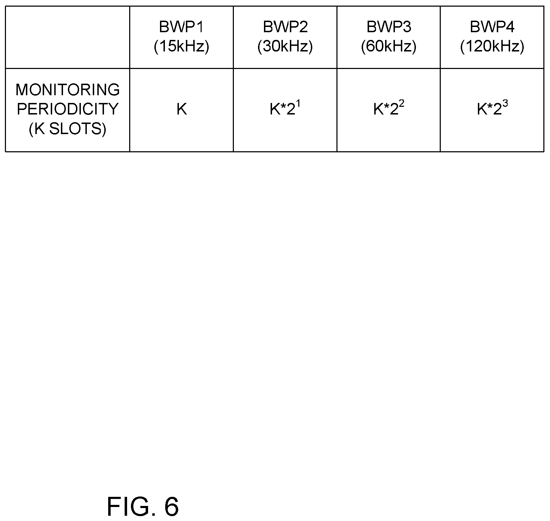

FIG. 6 is a diagram to show an example of the monitoring periodicity supported by the UE. In the present example, the UE monitors the PDCCH in the BWP1 and acquires SFI related to at least one of the BWP1, BWP2, BWP3, and BWP4. The SCSs related to the BWP1, BWP2, BWP3, and BWP4 are respectively 15, 30, 60, and 120 kHz. In this case, as illustrated in FIG. 6, assuming that the PDCCH monitoring periodicity for the BWP1 is K slots, the PDCCH monitoring periodicities for the BWP2, BWP3, and BWP4 may be respectively determined to be 2K, 4K, and 8K slots.

The PDCCH monitoring periodicity for the cross-BWP/CC may be identified, based on the numerology for the monitoring BWP/CC and the PDCCH monitoring periodicity for the monitoring BWP/CC.

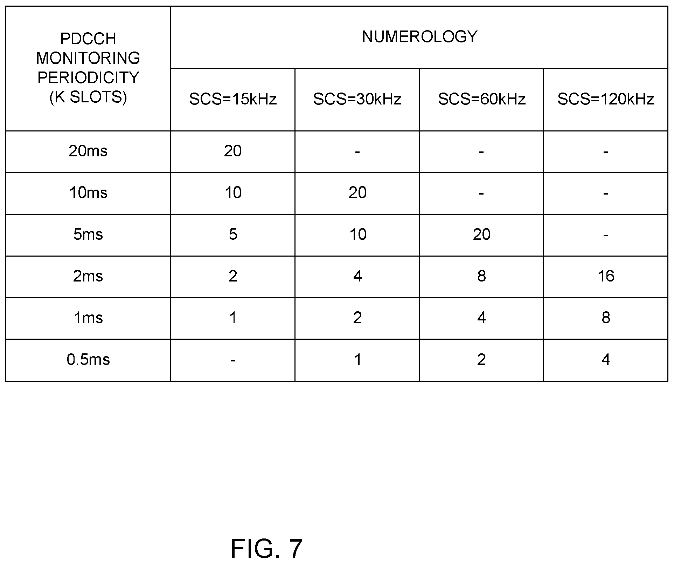

FIG. 7 is a diagram to show an example of the correspondence relationship between the numerology and the monitoring periodicity. The leftmost column in FIG. 7 indicates the PDCCH monitoring periodicity for the monitoring BWP/CC. In the present example, the numerology (SCS) for the monitoring BWP/CC is assumed to be 15 kHz in a case where the period is 1 ms or longer, and the numerology (SCS) for the monitoring BWP/CC is assumed to be 30 kHz in a case where the period is 0.5 ms or longer, but the embodiment is not limited to this.

In FIG. 7, numerologies for periods of more than 20 slots are excluded. However, these numerologies may be included. For example, for realization of a PDCCH monitoring periodicity of 20 ms, 40, 80, and 160 may be configured in the appropriate sections for SCS = 30 kHz, 60 kHz, and 120 kHz in FIG. 7. Similarly, for realization of a PDCCH monitoring periodicity of 10 ms, 40 and 80 may be configured in the appropriate sections for SCS = 60 kHz and 120 kHz, and for realization of a PDCCH monitoring periodicity of 5 ms, 40 may be configured in the appropriate section for SCS = 120 kHz. Note that, in the present example, the slot length is assumed to be 1 ms but may have any other value.

In the correspondence relationship in the present example, the PDCCH monitoring periodicity for the cross-BWP/CC is specified to be a 2ⁿ(n ≥ 1) multiple of the PDCCH monitoring periodicity for the monitoring BWP/CC, used as a reference. n is a value based on a ratio between the numerology for the monitoring BWP/CC and the other numerologies.

For example, in FIG. 7, in a case where the PDCCH monitoring periodicity for the monitoring BWP/CC is 10 ms and the SCS for the monitoring BWP/CC = 15 kHz, the UE can judge the monitoring periodicity for the cross-BWP/CC corresponding to SCS = 30 kHz to be 20 ms.

The base station may report (configure) information related to the PDCCH monitoring periodicity for the monitoring BWP/CC, to (for) the UE through higher layer signaling, physical layer signaling, or a combination thereof.

The base station may report (configure) information related to the correspondence relationship between the numerology and the monitoring periodicity, to (for) the UE through higher layer signaling, physical layer signaling, or a combination thereof.

According to the first embodiment described above, even in a case where a plurality of numerologies are used, the PDCCH monitoring periodicity can be appropriately judged. The UE can perform the PDCCH monitoring for the monitoring BWP/CC and the PDCCH monitoring for the cross-BWP/CC at the same timing, enabling a suitable reduction in UE loads attributed to monitoring.

In a further example, the PDCCH monitoring periodicity is numerology-agnostic. For example, a PDCCH monitoring periodicity may be commonly used regardless of the numerologies for BWPs/CCs.

Even in a case where a plurality of different BWPs/CCs have different numerologies, the PDCCH monitoring periodicity for the monitoring BWP/CC and the PDCCH monitoring periodicity for the cross-BWP/CC need not be aligned at the same timing.

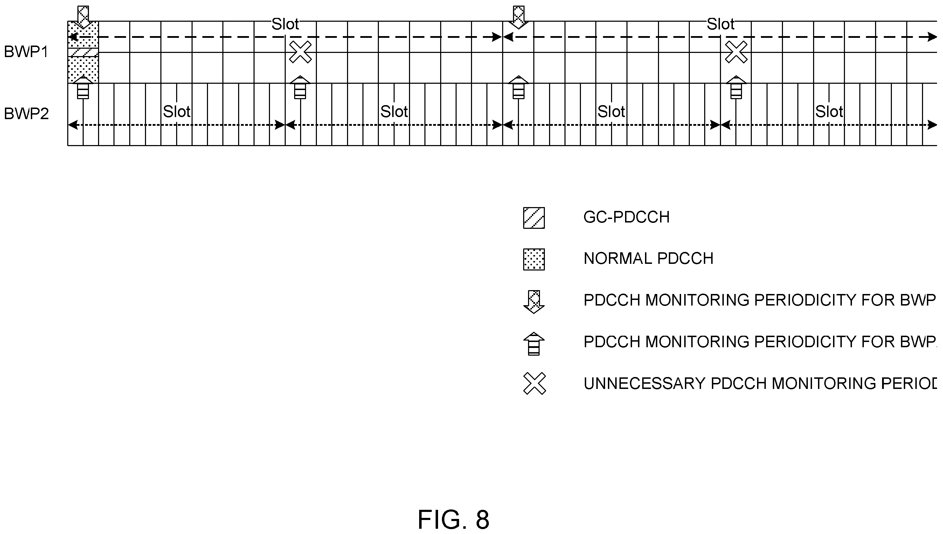

FIG. 8 is a diagram to show an example of the PDCCH monitoring periodicity. An environment assumed in the present example is similar to the environment in FIG. 4, and thus the description will not be repeated.

For the UE, K slots may be configured as a common PDCCH monitoring periodicity (that may be referred to as a cell-specific monitoring periodicity). In this case, both the PDCCH monitoring periodicity for the BWP1 and the PDCCH monitoring periodicities for the BWP2 are K slots. In FIG. 8, K = 1. The PDCCH monitoring periodicity for the BWP1 corresponds to one slot in the numerology for the BWP1, and the PDCCH monitoring periodicity for the BWP2 corresponds to one slot in the numerology for the BWP2 (in other words, 0.5 slots in the numerology for the BWP1).

The PDCCH is allocated to leading several symbols in a slot (for example, leading one to three symbols), and thus the PDCCH monitoring for the BWP2 may be performed during a time when no PDCCH is present (periods of time denoted by "x" in FIG. 8).

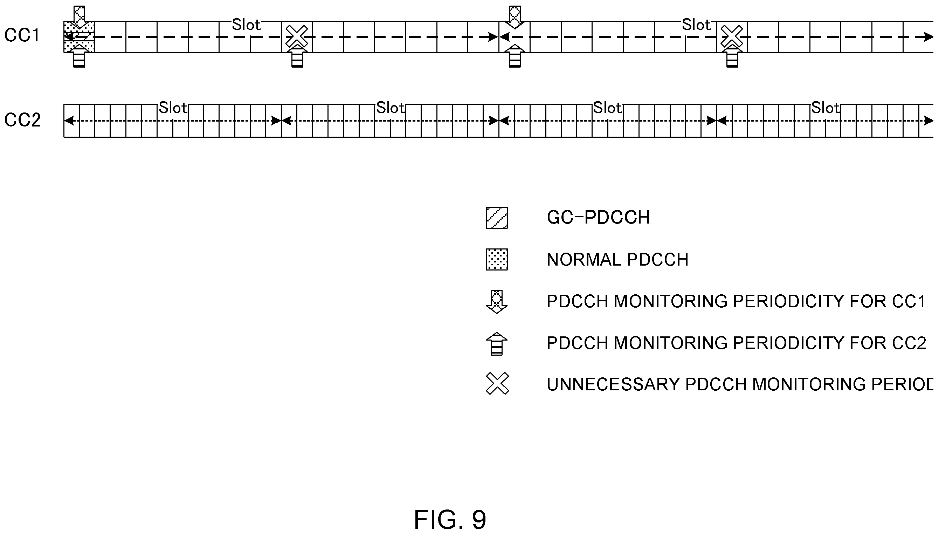

FIG. 9 is a diagram to show another example of the PDCCH monitoring periodicity. An environment assumed in the present example is similar to the environment in FIG. 5, and thus the description will not be repeated.

For the UE, K slots may be configured as a common PDCCH monitoring periodicity (that may be referred to as a cell-specific monitoring periodicity). In this case, both the PDCCH monitoring periodicity for the CC1 and the PDCCH monitoring periodicity for the CC2 are K slots. In FIG. 8, K = 1. The PDCCH monitoring periodicity for the CC1 corresponds to one slot in the numerology for the CC1, and the PDCCH monitoring periodicity for the CC2 corresponds to one slot in the numerology for the CC2 (in other words, 0.5 slots in the numerology for the CC1).

The PDCCH is allocated to leading several symbols in a slot (for example, leading one to three symbols), and thus the PDCCH monitoring for the CC2 may be performed during a time when no PDCCH is present (periods of time denoted by "x" in FIG. 9).

The base station may report information related to the cell-specific monitoring periodicity, to the UE through higher layer signaling, physical layer signaling, or a combination thereof.

Even in a case where a plurality of numerologies are used, the PDCCH monitoring periodicity can be appropriately judged. The UE can judge that the PDCCH monitoring periodicity for the monitoring BWP/CC is the same as the PDCCH monitoring periodicity for the cross-BWP/CC, enabling a suitable reduction in UE loads for recognition of the monitoring periodicity.

### <Variations>

For each BWP/CC, the base station may report information related to each PDCCH monitoring periodicity for the monitoring BWP/CC (information related to a BWP-specific monitoring periodicity and information related to a CC-specific monitoring periodicity), to the UE through higher layer signaling, physical layer signaling, or a combination thereof.

The PDCCH monitoring periodicity may be configured to be BWP/CC-specific. Even in a case where the same numerology is used for a plurality of BWPs/CCs (for example, the SCS has the same value), the PDCCH monitoring periodicities for the BWPs/CCs may be configured to be different from one another. For example, the PDCCH monitoring periodicity may be independently configured regardless of the numerologies for BWPs/CCs.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

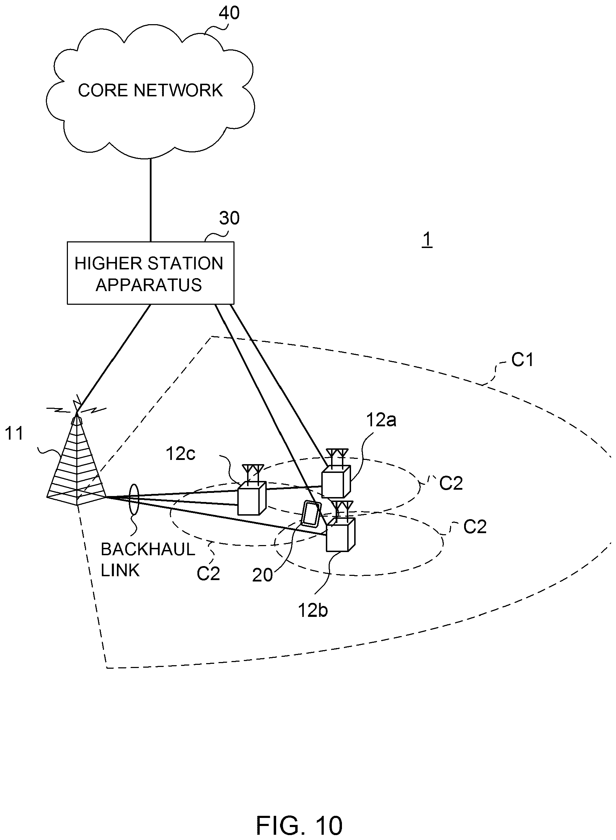

FIG. 10 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and so on of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can apply CA or DC by using a plurality of cells (CCs) (for example, five or more CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a given signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if given physical channels use different subcarrier spacings of the OFDM symbols constituted and/or different numbers of the OFDM symbols, it may be referred to as that the numerologies are different.

A wired connection (for example, means in compliance with the Common Public Radio Interface (CPRI) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. The radio base stations 12 are radio base stations having local coverages, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (Physical Downlink Shared Channel (PDSCH), which is used by each user terminal 20 on a shared basis, a broadcast channel (Physical Broadcast Channel (PBCH)), downlink L1/L2 control channels and so on, are used as downlink channels. User data, higher layer control information, System Information Blocks (SIBs) and so on are communicated on the PDSCH. The Master Information Blocks (MIBs) are communicated on the PBCH.

The downlink L1/L2 control channels include a Physical Downlink Control Channel (PDCCH), an Enhanced Physical Downlink Control Channel (EPDCCH), a Physical Control Format Indicator Channel (PCFICH), a Physical Hybrid-ARQ Indicator Channel (PHICH) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of Hybrid Automatic Repeat reQuest (HARQ) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on are used as uplink channels. User data, higher layer control information and so on are communicated on the PUSCH. In addition, radio quality information (Channel Quality Indicator (CQI)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (Sounding Reference Signal (SRS)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

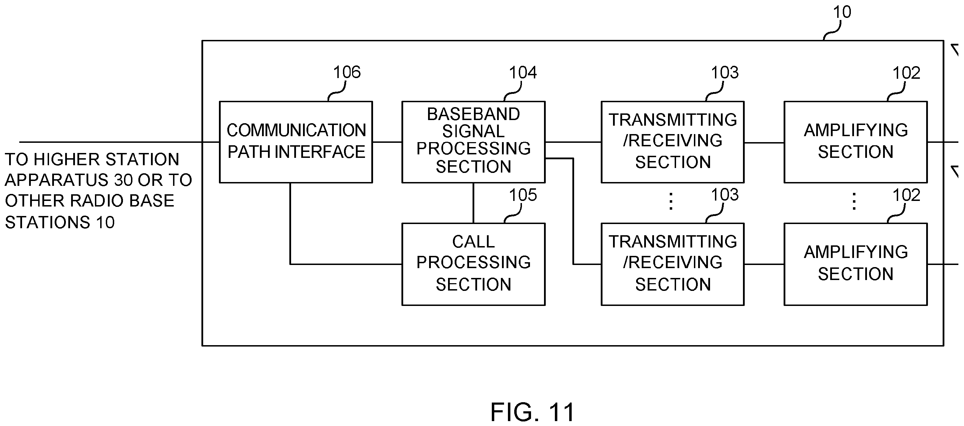

FIG. 11 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a Packet Data Convergence Protocol (PDCP) layer process, division and coupling of the user data, Radio Link Control (RLC) layer transmission processes such as RLC retransmission control, Medium Access Control (MAC) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and/or receives signals to and/or from the higher station apparatus 30 via a given interface. The communication path interface 106 may transmit and/or receive signals (backhaul signaling) with other radio base stations 10 via an inter-base station interface (for example, an optical fiber in compliance with the Common Public Radio Interface (CPRI) and an X2 interface).

The transmitting/receiving sections 103 transmit downlink control information (DCI) to the user terminal 20 via the normal PDCCH, the GC-PDCCH, and so on.

The transmitting/receiving section 103 may transmit, to the user terminal 20, information related to the PDCCH monitoring periodicity for the monitoring BWP/CC, information related to the correspondence relationship between the numerology and the monitoring periodicity, information related to the cell-specific monitoring periodicity, information related to the BWP-specific monitoring periodicity, information related to the CC-specific monitoring periodicity, and so on.

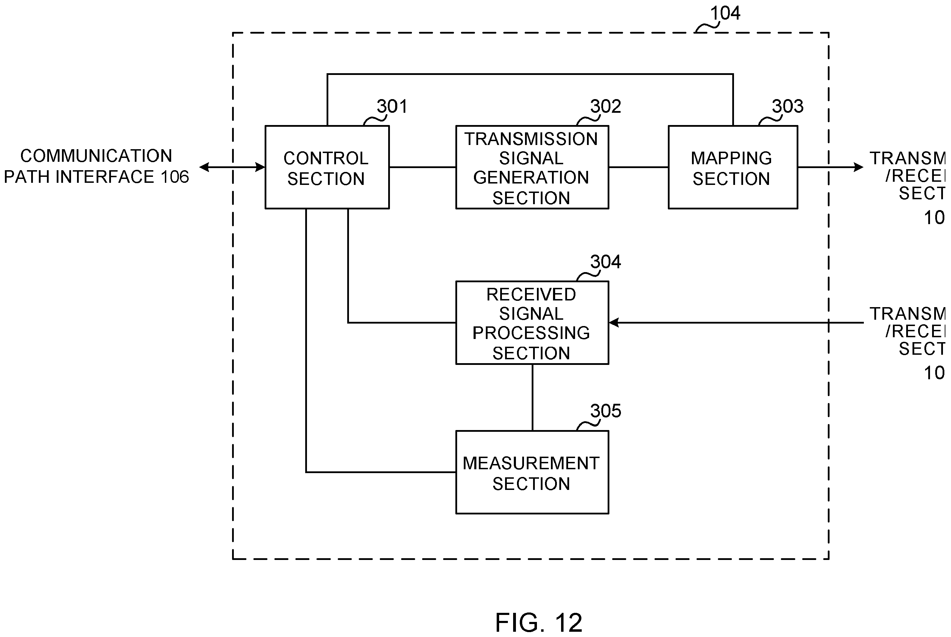

FIG. 12 is a diagram to show an example of a functional structure of the radio base station according to one embodiment of the present disclosure. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, Primary Synchronization Signal (PSS)/Secondary Synchronization Signal (SSS)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH. Transmission confirmation information, and so on), a random access preamble (for example, a signal transmitted on the PRACH), an uplink reference signal, and so on.

The control section 301 may perform control to transmit information for causing judgment, based on a monitoring periodicity for downlink control channel for control in a given frequency resource (for example, a specific CC or a specific BWP), of a monitoring periodicity for downlink control channel for control in another frequency resource (for example, a CC different from the above-described specific CC, a BWP different from the above-described specific BWP, or the like).

The downlink control channel in this case may be, for example, the normal PDCCH, the GC-PDCCH, or the like. The control in the frequency resource may be transmitting/receiving processing for the frequency resource based on SFI, transmitting/receiving processing for the frequency resource based on scheduling (DL assignment, UL grant, and so on), and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to given radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform Radio Resource Management (RRM) measurement, Channel State Information (CSI) measurement, and so on, based on the received signal. The measurement section 305 may measure a received power (for example, Reference Signal Received Power (RSRP)), a received quality (for example, Reference Signal Received Quality (RSRQ), an SINR (Signal to Interference plus Noise Ratio), an SNR (Signal to Noise Ratio)), a signal strength (for example, Received Signal Strength Indicator (RSSI)), channel information (for example, CSI), and so on. The measurement results may be output to the control section 301.

### (User Terminal)

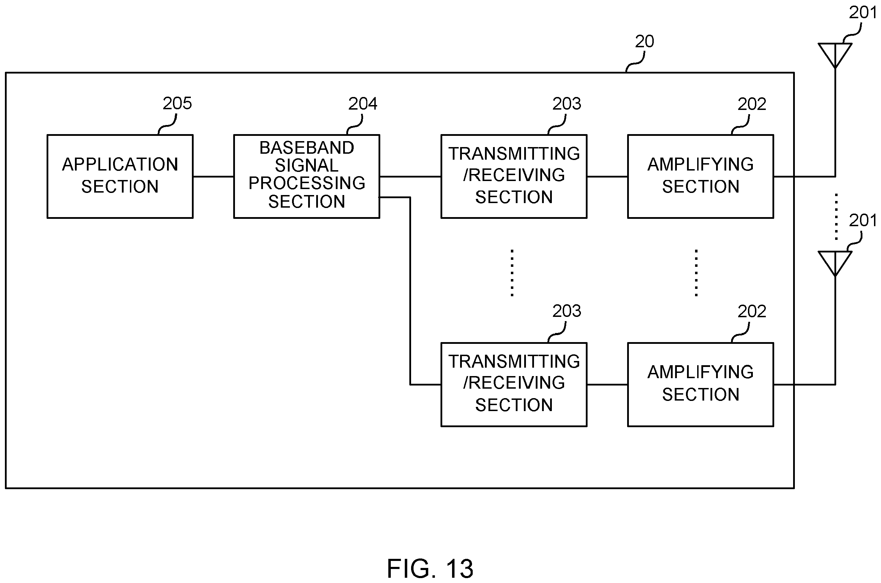

FIG. 13 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may monitor, in a given frequency resource, a downlink control channel for control in another frequency resource. The monitoring periodicity for the downlink control channel, the periodicity of time, and so on may be judged by a control section 401 described below. The transmitting/receiving sections 203 receive downlink control information (DCI) via the normal PDCCH, the GC-PDCCH, and so on. For example, the DCI may include SFI.

The transmitting/receiving section 203 may receive, from the radio base station 10, the information related to the PDCCH monitoring periodicity for the monitoring BWP/CC, the information related to the correspondence relationship between the numerology and the monitoring periodicity, the information related to the cell-specific monitoring periodicity, the information related to the BWP-specific monitoring periodicity, the information related to the CC-specific monitoring periodicity, and so on.

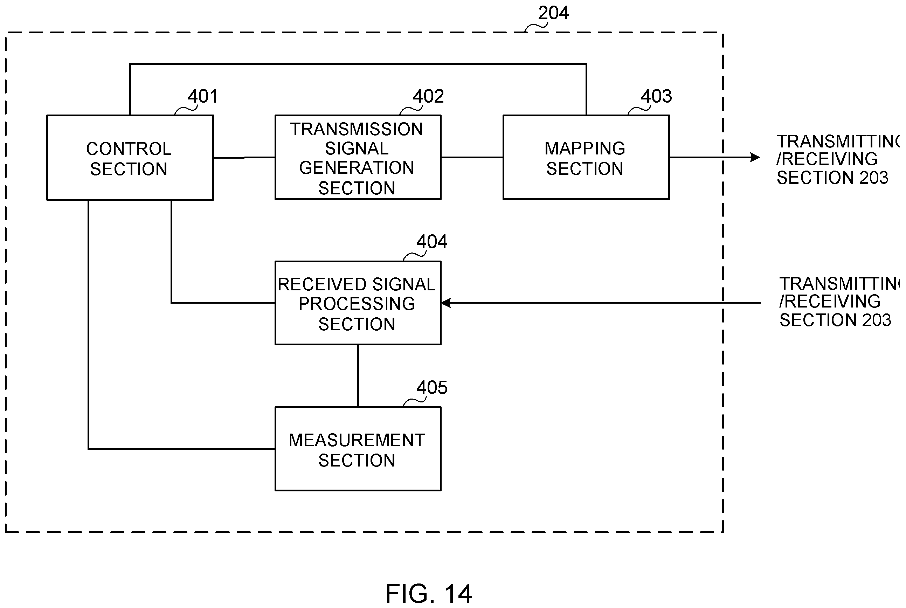

FIG. 14 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may judge, based on a monitoring periodicity for downlink control channel for control in a given frequency resource (for example, a specific CC or a specific BWP), a monitoring periodicity for downlink control channel for control in another frequency resource (for example, a CC different from the above-described specific CC, a BWP different from the above-described specific BWP, or the like).

The downlink control channel in this case may be, for example, the normal PDCCH, the GC-PDCCH, or the like. Additionally, the "control in the frequency resource" may be transmitting/receiving processing for the frequency resource based on SFI, transmitting/receiving processing for the frequency resource based on scheduling (DL assignment, UL grant, and so on), and so on. The control section 401 may perform control in the frequency resource.

The control section 401 may judge, based on the monitoring periodicity for the downlink control channel for control in the given frequency resource and a numerology used in the another frequency resource, the monitoring periodicity for the downlink control channel for control in the another frequency resource (see the first embodiment).

The control section 401 may judge that the monitoring periodicity for the downlink control channel for control in the another frequency resource is the same as the monitoring periodicity for the downlink control channel for control in the given frequency resource (see the second embodiment). For example, the monitoring periodicities corresponding to different numerologies are the same may mean that the numbers of slots, indicating the monitoring periodicities, are the same.

Note that the control section 401 may judge the monitoring periodicity for the downlink control channel for control in the another frequency resource, based on the numerology for the another frequency resource. The control section 401 may judge the monitoring periodicity for the downlink control channel for control in the given frequency resource, based on the numerology for the given frequency resource. The control section 401 may judge, based on a numerology for a specific frequency resource, a monitoring periodicity for downlink control channel for control in another frequency resource.

If the control section 401 acquires a variety of information reported by the radio base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

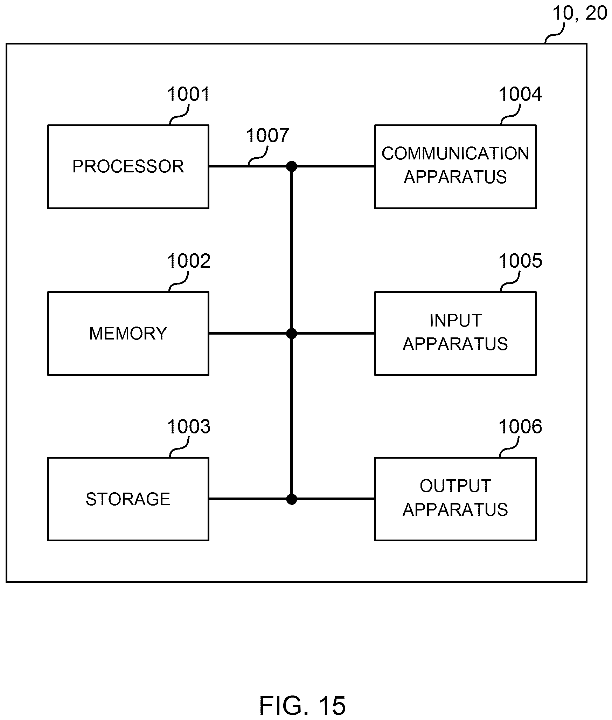

For example, a radio base station, a user terminal, and so on according to one embodiment of the present disclosure may function as a computer that executes the processes of the radio communication method of the present disclosure. FIG. 15 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to one embodiment.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an Application Specific Integrated Circuit (ASIC), a Programmable Logic Device (PLD), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to given values, or may be represented in another corresponding information. For example, radio resources may be specified by given indices.

The names used for parameters and so on in this specification are in no respect limiting. For example, since various channels (Physical Uplink Control Channel (PUCCH), Physical Downlink Control Channel (PDCCH), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (Device-to-Device (D2D)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GW), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), asgivening, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and noninclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the invention has been described in detail above, it should be obvious to a person skilled in the art that the present invention is by no means limited to the embodiments described in this specification. The present invention can be implemented with various corrections and in various modifications, without departing from the scope of the invention defined by the recitations of claims. Consequently, the description in this specification is provided only for the purpose of explaining examples, and should by no means be construed to limit the present invention in any way.

## Claims

1. A terminal (20) comprising:
a receiving section (203) configured to monitor, in a first Bandwidth part, BWP, a Physical Downlink Control Channel, PDCCH; **characterized by** further comprising:
a control section (401) configured to perform a control operation by using, as a PDCCH monitoring periodicity for the first BWP, a PDCCH monitoring periodicity for a second BWP, whose numerology is different than the first BWP, multiplied by a power of 2.

2. The terminal (20) according to claim 1, wherein a Sub-Carrier Spacing, SCS, of the first BWP and a SCS of the second BWP are different.

3. The terminal (20) according to claim 1 or 2, wherein
the PDCCH for the first BWP is used for signaling that is common to a terminal group, and
the PDCCH monitoring periodicity for the first BWP is limited to 1, 2, 4, 5, 8, 10, 16, 20 slots.

4. A radio communication method for a terminal (20), comprising:
monitoring, in a first Bandwidth part, BWP, a Physical Downlink Control Channel, PDCCH; **characterized by** further comprising:
performing a control operation by using, as a PDCCH monitoring periodicity for the first BWP, a PDCCH monitoring periodicity for a second BWP, whose numerology is different than the first BWP, multiplied by a power of 2.

5. A system comprising a terminal (20) and a base station (10), wherein:
the terminal (20) comprises:
a receiving section (203) configured to monitor, in a first Bandwidth part, BWP, a Physical Downlink Control Channel, PDCCH; **characterized by** further comprising:
a control section (401) configured to perform a control operation by using, as a PDCCH monitoring periodicity for the first BWP, a PDCCH monitoring periodicity for a second BWP, whose numerology is different than the first BWP, multiplied by a power of 2, and
the base station (10) comprises:
a transmitting section (103) configured to transmit the PDCCH that is monitored by the terminal (20) in the first BWP.

## Patentansprüche

1. Endgerät (20), umfassend:
einen Empfangsabschnitt (203), der konfiguriert ist, um in einem ersten Bandbreitenteil, BWP, einen physikalischen Abwärtsverbindungssteuerungskanal, PDCCH, zu überwachen; **dadurch gekennzeichnet, dass** es weiter umfasst:
einen Steuerungsabschnitt (401), der konfiguriert ist, um eine Steuerungsoperation durchzuführen, indem als PDCCH-Überwachungsperiodizität für den ersten BWP eine PDCCH-Überwachungsperiodizität für einen zweiten BWP verwendet wird, deren Numerologie sich von der des ersten BWP unterscheidet, multipliziert mit einer Potenz von 2.

2. Endgerät (20) nach Anspruch 1, wobei ein Unterträgerabstand, SCS, des ersten BWP und ein SCS des zweiten BWP sind unterscheiden.

3. Endgerät (20) nach Anspruch 1 oder 2, wobei
der PDCCH für den ersten BWP für Signalisierung verwendet wird, die für eine Endgerätegruppe gemeinsam ist, und
die PDCCH-Überwachungsperiodizität für den ersten BWP auf 1, 2, 4, 5, 8, 10, 16, 20 Schlitze begrenzt ist.

4. Funkkommunikationsverfahren für ein Endgerät (20), umfassend:
Überwachen eines physikalischen Abwärtsverbindungssteuerungskanals, PDCCH, in einem ersten Bandbreitenteil, BWP; **dadurch gekennzeichnet, dass** es weiter umfasst:
Durchführen einer Steuerungsoperation, indem als PDCCH-Überwachungsperiodizität für den ersten BWP eine PDCCH-Überwachungsperiodizität für einen zweiten BWP verwendet wird, deren Numerologie sich von der des ersten BWP unterscheidet, multipliziert mit einer Potenz von 2.

5. System, das ein Endgerät (20) und eine Basisstation (10) umfasst, wobei:
das Endgerät (20) umfasst:
einen Empfangsabschnitt (203), der konfiguriert ist, um in einem ersten Bandbreitenteil, BWP, einen physikalischen Abwärtsverbindungssteuerungskanal, PDCCH, zu überwachen; **dadurch gekennzeichnet, dass** es weiter umfasst:
einen Steuerungsabschnitt (401), der konfiguriert ist, um eine Steuerungsoperation durchzuführen, indem als PDCCH-Überwachungsperiodizität für den ersten BWP eine PDCCH-Überwachungsperiodizität für einen zweiten BWP verwendet wird, deren Numerologie sich von der des ersten BWP unterscheidet, multipliziert mit einer Potenz von 2, und
die Basisstation (10) umfasst:
einen Sendeabschnitt (103), der konfiguriert ist, um den PDCCH zu senden, der von dem Endgerät (20) in dem ersten BWP überwacht wird.

## Revendications

1. Terminal (20) comprenant :
une unité de réception (203) configurée pour surveiller, dans une première partie de bande passante, BWP, un canal de commande de liaison descendante physique, PDCCH ; **caractérisé en ce qu'**il comprend en outre :
une section de commande (401) configurée pour mettre en oeuvre une opération de commande en utilisant, en tant que périodicité de surveillance de PDCCH pour la première BWP, une périodicité de surveillance de PDCCH pour une seconde BWP, dont la numérologie est différente de la première BWP, multipliée par une puissance de 2.

2. Terminal (20) selon la revendication 1, dans lequel un espacement de sous-porteuses, SCS, de la première BWP et un SCS de la seconde BWP sont différents.

3. Terminal (20) selon la revendication 1 ou la revendication 2, dans lequel
le PDCCH pour la première BWP est utilisé pour signaler qu'il est commun à un groupe terminal, et
la périodicité de surveillance de PDCCH pour la première BWP est limitée à 1, 2, 4, 5, 8, 10, 16, 20 créneaux.

4. Procédé de radiocommunication pour un terminal (20), comprenant :
la surveillance, dans une première partie de bande passante, BWP, d'un canal de commande de liaison descendante physique, PDCCH ; **caractérisé en ce qu'**il comprend en outre :
la réalisation d'une opération de commande en utilisant, en tant que périodicité de surveillance de PDCCH pour la première BWP, une périodicité de surveillance de PDCCH pour une seconde BWP, dont la numérologie est différente de la première BWP, multipliée par une puissance de 2.

5. Système comprenant un terminal (20) et une station de base (10), dans lequel :
le terminal (20) comprend :
une unité de réception (203) configurée pour surveiller, dans une première partie de bande passante, BWP, un canal de commande de liaison descendante physique, PDCCH ; **caractérisé en ce qu'**il comprend en outre :
une section de commande (401) configurée pour réaliser une opération de commande en utilisant, en tant que périodicité de surveillance de PDCCH pour la première BWP, une périodicité de surveillance de PDCCH pour une seconde BWP, dont la numérologie est différente de la première BWP, multipliée par une puissance de 2, et
la station de base (10) comprend :
une section de transmission (103) configurée pour transmettre le PDCCH qui est surveillé par le terminal (20) dans la première BWP.
